(19)

Europäisches
Patentamt
European
Patent Office
Office européen
des brevets

(11) **EP 4 546 371 A1**

(12) **EUROPEAN PATENT APPLICATION**
published in accordance with Art. 153(4) EPC

(43) Date of publication:
**30.04.2025 Bulletin 2025/18**

(21) Application number: 22948124.7

(22) Date of filing: **22.12.2022**

(51) International Patent Classification (IPC):
*G21C 3/04* (2006.01)    *G21C 3/30* (2006.01)

(52) Cooperative Patent Classification (CPC):
**G21C 3/04; G21C 3/30**

(86) International application number:
**PCT/RU2022/000387**

(87) International publication number:
**WO 2023/249511 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **21.06.2022  RU 2022116799**

(71) Applicant: **Joint-Stock Company "TVEL"
Moscow 115409 (RU)**

(72) Inventors:
• **AKSENOV, Pyotr Mikhaylovich
  g. Elektrostal', 144010 (RU)**
• **LUZAN, Yuriy Vasil'yevich
  g. Elektrostal', 144004 (RU)**
• **FILIPPOV, Vladimir Romanovich
  Moscow, 119270 (RU)**

(74) Representative: **Danubia Patent & Law Office LLC
Bajcsy-Zsilinszky út 16
1051 Budapest (HU)**

(54) **NUCLEAR REACTOR FUEL ASSEMBLY (EMBODIMENTS)**

(57)    The invention relates to the field of nuclear engineering, and more particularly to fuel assemblies for VVER-type nuclear reactors. The present fuel assembly comprises a bundle of fuel elements arranged in a regular triangular pattern with a spacing of 12.2-12.3 mm within spacer grids connected to a central tube, a hexagonal casing connected to a top nozzle and bottom nozzle, and a debris filter. The outside diameter of the cladding of the fuel elements is 0.720-0.733 of the spacing of the pattern, the diameter of the fuel pellets being 7.57-7.60 mm. In a second embodiment, the fuel assembly has a regular triangular pattern with a spacing of 12.60-12.75 mm and a reinforcing structure of spacer grids connected by longitudinal tubes and corner elements, wherein the outside diameter of the cladding of the fuel elements is 0.695-0.710 of the spacing of the pattern, the diameter of the fuel pellets being 7.57-7.60 mm. The invention makes it possible to increase the water-to-uranium ratio of fuel assemblies, reduce the metal requirement of such assemblies, and improve their neutronic characteristics and energy yield.

Fig.1

**EP 4 546 371 A1**

**Description**

**TECHNICAL FIELD**

The invention relates to the field of nuclear engineering, and more particularly to the type of nuclear reactor fuel assembly as VVER-440, VVER-1000, VVER-1200, etc.

**BACKGROUND**

Nuclear reactor fuel assemblies VVER-440, VVER-1000 are well known (see Kirillov P.L., et al. Handbook for Thermohydraulic Calculation (Nuclear Reactors, Heat Exchangers, Steam Generators) are known from prior art. Energoatomizdat, Moscow, 1990., fig. P.8.1, P.8.3 and P.8.5, pp. 317-319).

In nuclear reactor VVER-440, the fuel assemblies of the first and second generation have a hexagonal casing that connects a top nozzle and a bottom nozzle with fuel elements arranged in a regular triangular pattern using spacer grids connected to a central tube.

The fuel elements contain fuel pellets sealed in the cladding with a plug and a tip using butt resistance welding which are fixed with a 2-stage spring lock to prevent longitudinal movements.

The spring step with the larger diameter is the fixing part resting on the inner surface of the cladding with a certain tension, and the thin step is the compensating part of the lock, resting on the upper fuel pellet, pressing the fuel stack. The advantage of the lock is that it does not load the weld joint of the cladding and the plug during operation.

The outer diameter of the fuel element cladding is 9.1 mm, with the outer diameter of the fuel pellet being $7.6_{-0.03}$ mm.

The grid spacing of fuel elements in the casing assemblies of the first generation VVER-440 reactor is 12.2 mm, and for the second generation it is 12.3 mm.

The disadvantage of the known casing fuel assemblies of VVER-440 nuclear reactor is low water-to-uranium ratio.

Water-to-uranium ratio n for the regular triangular grid of fuel elements is calculated using the formula (see Skvortsov S.A. Pressurized water reactors (VVER) in the Soviet Union. Atomic Energy. Volume 5, edition 3, 1958, p. 247)

$$n = \frac{2\sqrt{3}s^2}{\pi d_t^2} - \frac{d^2}{d_t^2}, \qquad (1)$$

where:

    s - grid spacing of the fuel elements,
    d - outer diameter of the fuel element cladding,
    $d_t$ - outer diameter of the fuel pellet.

Formula (1) calculations show that for the known fuel assemblies of VVER-440 nuclear reactor with a hexagonal casing and 12.2...12.3 mm grid spacing of fuel elements, the water to-uranium ratio is 1.41...1.47.

The optimal amount of water in the cell from the thermal engineering point of view for pressurized water VVER reactors, including VVER-440 reactor, is practically the same as the optimal amount of water from the neutronics point of view. The corresponding value of the water-to-uranium ratio, as shown by neutronics calculations, is $n_{opt}$= 1.9.

Due to the low water-to-uranium ratio of casing fuel assemblies, designs of fuel assemblies with no casing were developed making it possible to increase the grid spacing of the fuel elements in the existing VVER-440, VVER-1000 and VVER-1200 nuclear reactors.

In the fuel assemblies of VVER-1000 reactor and the third generation fuel assemblies of VVER-440 reactor, casing was excluded, however in order to ensure their initial transverse rigidity, a reinforcing structure was formed consisting of guide channels in the form of longitudinal tubes, spacer grids and a central tube connecting a top nozzle and a bottom nozzle. Additionally, in TVS-2M (fuel assembly) of VVER-1000 and VVER-1200 reactors, the spacer grids are rigidly attached to the guide channels using spot welding, and in TVSA of VVER-1000 reactor and in the third generation assemblies of VVER-440 reactor, there are additional longitudinal corner elements, to which the spacer grids are also rigidly attached using spot welding.

The closest in technical essence and in the achieved result in relation to the proposed fuel assembly, according to the first embodiment, is the second generation fuel assembly of VVER-440 nuclear reactor with the outer diameter of the fuel elements being 9.1 mm, located in a hexagonal casing in a regular triangular pattern with a spacing of 12.3 mm between the fuel elements (see. Bondar Yu.N., et al. Improving the WWER-440 Fuel Design and Technology. 8th International Conference on WWER Fuel Performance, Modelling and Experimental Support. Sofia, Bulgaria, Institute for Nuclear Research and Nuclear Energy, 2010, pp. 186 - 190).

The closest in technical essence and in the achieved result in relation to the proposed fuel assembly, according to the second embodiment, is the third generation fuel assembly for VVER-440 reactor (RU2728894 dated 03.08.2020, G21C3/30) with a reinforcing structure consisting of a central tube and 6 longitudinal corner elements, to which the spacer grids are fixed using spot welding, with the outer diameter of the fuel elements being 9.1 mm, arranged in a regular triangular pattern with a spacing of 12.6 mm.

The choice of 9.1 mm as the single value for the outer diameter of the fuel element cladding without specifying the ranges of the required values of the fuel element outer diameters, the corresponding grid spacing range of the spacer grids and their relations (which implies combinations of specific values included in them) does not allow to increase the water-to-uranium ratio of the fuel assembly of VVER-440, VVER-1000 nuclear reactors or reduce metal consumption. The known fuel assemblies have a water-to-uranium ratio of 1.45...1.61, which is significantly less than the optimal value.

## DISCLOSURE OF INVENTION

The objective of the claimed invention is to increase the energy yield of the fuel assembly of VVER-440, VVER-1000 and VVER-1200 nuclear reactors.

The technical result of the invention is an increase in the water-to-uranium ratio of fuel assemblies of VVER-440 and VVER-1000 nuclear reactors by reducing the outer diameter of the fuel element cladding, reducing metal consumption and, ultimately, improving its neutronic characteristics and energy yield.

## SUMMARY

The technical result is achieved by:

- the nuclear reactor fuel assembly, including a bundle of fuel elements containing fuel pellets pressed in the axial direction with a 2-stage spring lock resting on the cladding of the fuel element, sealed with a plug and a tip using butt resistance welding, arranged in a regular triangular pattern with a spacing of 12.2...12.3 mm in spacer grids connected to a central tube, a hexagonal casing connected to a top nozzle and a bottom nozzle, a debris filter, the outer diameter of the fuel elements cladding is 0.720...0.733 of the fuel elements spacing of the pattern, with the fuel pellet diameter being 7.57...7.60 mm.
- the nuclear reactor fuel assembly, including a bundle of fuel elements containing fuel pellets pressed in the axial direction with a 2-stage spring lock resting on the cladding of the fuel element, sealed with a plug and a tip using butt resistance welding, arranged in a regular triangular pattern with a spacing of 12.60...12.75 mm in spacer grids, a load bearing frame, wherein the tubes and the corner elements are connected to a top nozzle and a bottom nozzle, a debris filter, characterized that the outer diameter of the fuel elements cladding is 695...0.710 of the fuel elements spacing of the pattern, with the fuel pellet diameter being 7.57...7.60 mm.
- the spacer grids are made of zirconium alloy E110 and cells connected to each other using spot welding.
- the fuel elements are connected to the supporting grid, welded to the bottom nozzle with a collet joint.
- the cladding, plug and tip of the fuel elements are made of zirconium alloy E110.
- the spring lock of the pellets in the fuel elements is made of chromium-nickel alloy or stainless steel.

The entire set of essential features ensures the solution to the stated object of the invention and the achievement of the above-mentioned new technical results.

## BRIEF DESCRIPTION OF DRAWINGS

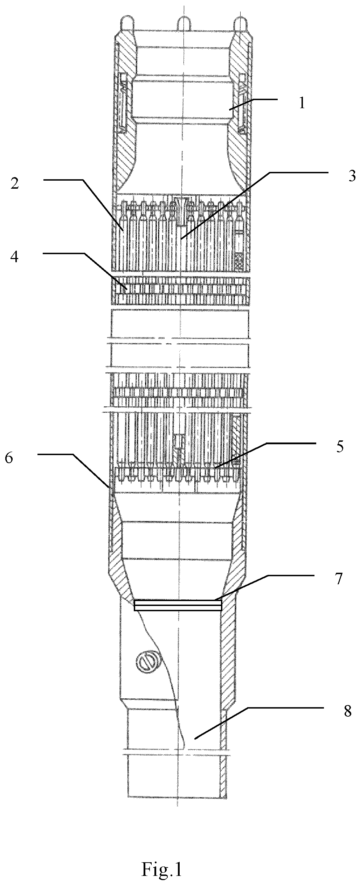

Fig. 1 shows the proposed fuel assembly according to the first embodiment (including casing).

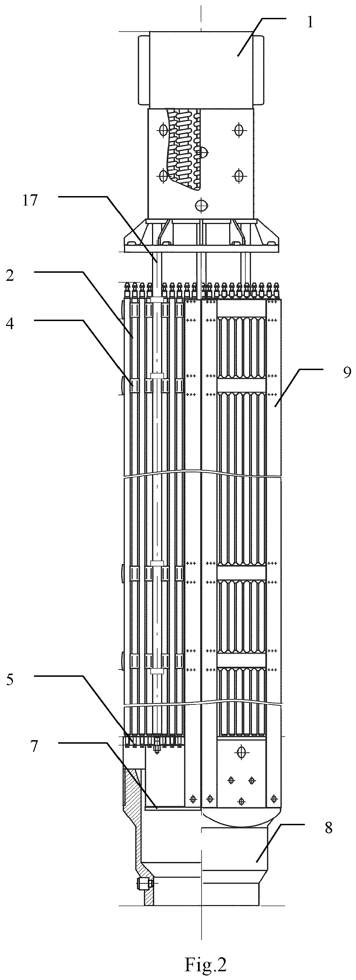

Fig. 2 shows the proposed fuel assembly according to the second (not including casing) embodiment.

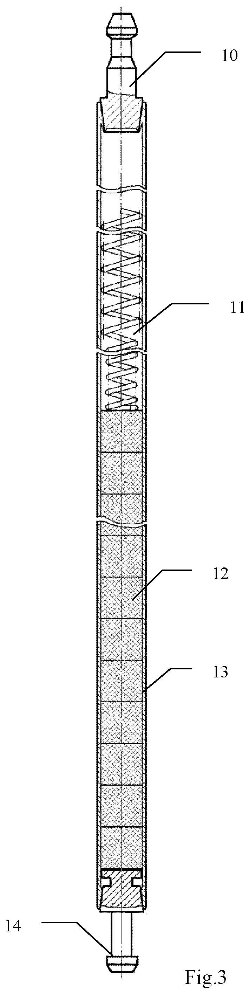

Fig. 3 shows the fuel element of the proposed fuel assembly.

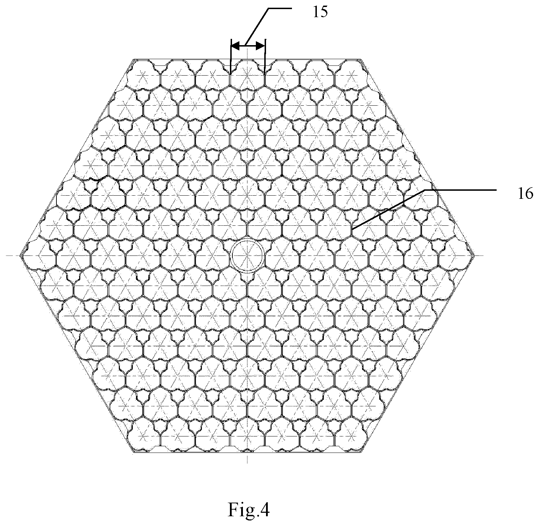

Fig. 4 shows the cellular spacer grid.

## INVENTION EMBODIMENT

The nuclear reactor fuel assembly according to the first embodiment (including casing) comprises a bundle of fuel elements 2 fixed in the lower grid 5, containing fuel pellets 12 pressed in the axial direction with a 2-stage spring lock 11 resting on the cladding 13 of the fuel element 2, sealed with a plug 10 and a tip 14 using butt resistance welding, arranged in a regular triangular pattern 15 with a spacing of 12.2...12.3 mm in the spacer grids 4 connected to a central tube 3, a hexagonal casing 6 connected to the top nozzle 1 and the bottom nozzle 8, a debris filter 7, with the outer diameter of the fuel elements cladding being 0.720...0.733 of the fuel elements 2 arrangement grid spacing 15 with the fuel pellet 12 having diameter 7.57...7.60 mm.

The nuclear reactor fuel assembly according to the second embodiment (not including casing) comprises a bundle of fuel elements 2 secured in the lower grid 5, containing fuel pellets 12 pressed in the axial direction with a 2-stage spring lock 11 resting on the cladding 13 of the fuel element 2, sealed with a plug 10 and a tip 14 using butt resistance welding arranged in a regular triangular pattern with a spacing of 12.60...12.75 mm in the spacer grids 4, a reinforcing structure of spacer grids 4 connected with longitudinal tubes 17 or connected with longitudinal tubes 17 and corner elements 9, and the reinforcing structure being connected to the top nozzle 1 and the bottom nozzle 8, a debris filter 7 installed in the bottom nozzle 8, with the outer diameter of the fuel elements cladding being 0.695...0.710 of the fuel elements 2 arrangement grid spacing 15 with the fuel pellet 12 having diameter of 7.57...7.60 mm.

The cladding 13, the plug 10, the tip 14 and the spacer grid 4 are made of zirconium alloy E110, and the cells 16 of the spacer grid 4 are connected using spot welding.

The spring lock 11 is made in the form of a 2-stage spring of chromium-nickel alloy type EK173-ID or stainless steel type 12X18N10T.

The fuel elements are connected with the tip 14 to the lower supporting mesh 5 with a collet joint.

As an example of the fuel assembly design according to the first embodiment, for VVER-type nuclear reactor fuel assemblies with fuel elements spacing of 12.2...12.3 mm, it is proposed to reduce the outer diameter of the fuel element cladding to 8.784...9.0159 mm, preferably 8.9 mm, and to leave the outer diameter of the uranium dioxide pellet the same at $7.6_{-0.03}$ mm. The 8.784... 9.016 mm range of the outer diameter of the fuel element claddings makes it possible to practically implement the proposed fuel assemblies for both the VVER-440 nuclear reactor and the VVER-1000 and VVER-1200 nuclear reactors. The studies analysis shows that, in comparison to the known ones, the proposed fuel assembly according to the first embodiment with the outer diameter of the fuel element cladding of 8.784... 9.016 mm, preferably 8.9 mm, has a significantly higher water-to-uranium ratio of up to 1.54, reduced metal consumption and, ultimately, an improvement in its neutronic characteristics and energy yield.

As an example of the fuel assembly design according to the second embodiment, for VVER-type nuclear reactor fuel assemblies with fuel elements spacing of 12.6...12.75 mm, it is proposed to reduce the outer diameter of the fuel element cladding to 8.757...9.0525 mm, preferably 8.9 mm, and to leave the outer diameter of the uranium dioxide pellet the same at $7.6_{-0.03}$ mm. The range of the outer diameter of the fuel element claddings of 8,757... 9,052 mm makes it possible to practically implement the proposed fuel assemblies for both the VVER-440 nuclear reactor and the VVER-1000 and VVER-1200 nuclear reactors. The studies analysis shows that, in comparison to the known ones, the proposed fuel assembly according to the second embodiment with the outer diameter of the fuel element cladding of 8,757... 9,052 mm, preferably 8.9 mm, has a significantly higher water to-uranium ratio of up to 1.76 which is considerably closer to the optimal value of 1,9, reduced metal consumption and, ultimately, an improvement in its neutronic characteristics and energy yield.

For practical implementation of the proposed design, the technology was developed and cladding tubes 13 with the outer diameter of 8.9 mm were manufactured, the technology for manufacturing spacer grids 4, fuel elements 2 and the fuel assembly was developed, and a pilot batch of fuel assemblies with the fuel element spacing of 12.3 mm was manufactured and put into trial operation at the Paks NPP.

Compared to the known ones, the proposed fuel assembly has a significantly higher water-to-uranium ratio, reduced metal consumption and, ultimately, improved neutronic characteristics and energy yield.

**Claims**

1. A nuclear reactor fuel assembly comprising a bundle of fuel elements containing fuel pellets pressed in the axial direction by a 2-stage spring lock resting on the cladding of the fuel element, sealed with a plug and a tip using butt resistance welding, arranged in a regular triangular pattern with a spacing of 12.2...12.3 mm in spacer grids connected to a central tube, a hexagonal casing connected to a top nozzle and a bottom nozzle, a debris filter, **characterized in that** the outside diameter of the fuel elements cladding is 0.720...0.733 of the spacing of the arrangement of fuel elements pattern, with a fuel pellet diameter of 7.57...7.60 mm.

2. The nuclear reactor fuel assembly of claim 1, **characterized in that** the spacer grids are made of zirconium alloy E110 and are connected to each other with butt resistance welding of the cells.

3. The nuclear reactor fuel assembly of claim 1, **characterized in that** the fuel elements are connected to the supporting grid welded to the end nozzle with a collet joint.

4. The nuclear reactor fuel assembly of claim 1, **characterized in that** the cladding, plug and tip of the fuel elements are made of zirconium alloy E110.

5. The nuclear reactor fuel assembly of claim 1, **characterized in that** the spring lock of the pellets in the fuel elements is made of chromium-nickel alloy or stainless steel.

6. A nuclear reactor fuel assembly, comprising a bundle of fuel elements containing fuel pellets pressed in the axial direction by a 2-stage spring lock resting on the cladding of the fuel element, sealed with a plug and a tip using butt resistance welding, arranged in a regular triangular pattern with a spacing of 12.60...12.75 mm in spacer grids, a reinforcing structure, connected to a top nozzle and a bottom nozzle, a debris filter, the assembly **characterized in that** the outside diameter of the cladding of the fuel elements is 0.695-0.710 of the spacing of the pattern, the diameter of the fuel pellets being 7.57-7.60 mm.

7. The nuclear reactor fuel assembly of claim 6 **characterized in that** the spacer grids are made of zirconium alloy E110 and are connected to each other with butt resistance welding of the cells.

8. The nuclear reactor fuel assembly of claim 6 **characterized in that** the fuel elements are connected to the supporting grid welded to the end nozzle with a collet joint.

9. The nuclear reactor fuel assembly of claim 6 **characterized in that** the cladding, plug and tip of the fuel elements are made of zirconium alloy E110.

10. The nuclear reactor fuel assembly of claim 6 **characterized in that** the spring lock of the pellets in the fuel elements is made of chromium-nickel alloy or stainless steel.

Fig.1

Fig.2

Fig.3

Fig.4

## INTERNATIONAL SEARCH REPORT

| | International application No. |
|---|---|
| | PCT/RU 2022/000387 |

| A. CLASSIFICATION OF SUBJECT MATTER |
|---|
| G21C 3/04 (2006.01)   G21C 3/30 (2006.01) |
| According to International Patent Classification (IPC) or to both national classification and IPC |

| B. FIELDS SEARCHED |
|---|
| Minimum documentation searched (classification system followed by classification symbols) |
| G21C 3/00, 3/04, 3/30 |
| Documentation searched other than minimum documentation to the extent that such documents are included in the fields searched |
| Electronic data base consulted during the international search (name of data base and, where practicable, search terms used) |
| PatSearch (RUPTO Internal), USPTO, PAJ, Espacenet, Information Retrieval System of FIPS |

| C. DOCUMENTS CONSIDERED TO BE RELEVANT |
|---|

| Category* | Citation of document, with indication, where appropriate, of the relevant passages | Relevant to claim No. |
|---|---|---|
| A | RU 2728894 C1 (AKTSIONERNOE OBSHCHESTVO "TVEL" et al.) 03.08.2020, abstract, claims 1, 8, figures 1, 6 | 1-10 |
| A | RU 2389088 C2 (OTKRYTOE AKTSIONERNOE OBSHCHESTVO "MASHINOSTROITEL'NY ZAVOD") 10.05.2010, abstract, page 4, line 34, page 5, lines 8-14 | 1-10 |
| A | RU 2610716 C1 (PUBLICHNOE PKTSIONERNOE OBSHCHESTVO "MASHINOSTROITEL'NY ZAVOD") 15.02.2017, abstract | 1-10 |
| A | RU 2242810 C2 (OTKRYTOE AKTSIONERNOE OBSHCHESTVO "MASHINOSTROITEL'NY ZAVOD" et al.) 20.12.2004, page 8, line 13-page 10, line 6 | 1-10 |
| A | RU 2638647 C2 (PUBLICHNOE AKTSIONERNOE OBSHCHESTVO "MASHINOSTROITEL'NY ZAVOD") 15.12.2017 | 1-10 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 April 2023 (06.04.2023) | 04 May 2023 (04.05.2023) |
| Name and mailing address of the ISA/ RU | Authorized officer |
| Facsimile No. | Telephone No. |

Form PCT/ISA/210 (second sheet) (April 2005)

**INTERNATIONAL SEARCH REPORT**

| International application No. |
|---|
| PCT/RU 2022/000387 |

C (Continuation). DOCUMENTS CONSIDERED TO BE RELEVANT

| Category* | Citation of document, with indication, where appropriate, of the relevant passages | Relevant to claim No. |
|---|---|---|
| A | BONDAR Y. N. et al. IMPROVING THE VVER-440 FUEL DESIGN AND TECHNOLOGY. 8th International Conference on WWER Fuel Performance, Modelling and Experimental Support. 16 September -04 October 2009, Helena Resort near Burgas, Bulgaria, (in co-operation with the International Atomic Energy Agency) | 1-10 |
| A | GB 1254040 A (WESTINGHOUSE ELECTRIC CORPORATION) 17.11.1971 | 1-10 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2728894

**Non-patent literature cited in the description**

- Nuclear Reactors, Heat Exchangers, Steam Generators. **KIRILLOV P.L et al.** Handbook for Thermohydraulic Calculation. 1990
- Soviet Union. Atomic Energy. 1958, 247
- Improving the WWER-440 Fuel Design and Technology. **BONDAR YU.N. et al.** 8th International Conference on WWER Fuel Performance, Modelling and Experimental Support. Institute for Nuclear Research and Nuclear Energy, 2010, 186-190